# EUROPEAN PATENT APPLICATION

(11) **EP 0 560 559 A2**
(43) Date of publication of application: **15.09.1993**
(21) Application number: 93301742.8
(22) Date of filing: 08.03.1993
(51) Int. Cl.: G01V 1/38, G01V 1/36, G01V 1/20

(54) **Method of cancelling turbulence noise in a fluid-filled seismic streamer**

(30) Priority: 09.03.1992 NO 920921
(71) Applicant: GECO A.S., N-4000 Stavanger (NO)
(72) Inventor: Bjelland, Cato, N-5150 Isdalsto (NO); Langeland, Jan-Age, N-5234 Garnes (NO)
(74) Representative: Robinson, John Stuart

(57) **Abstract**

Turbulence (8) in a boundary layer on the outside of the streamer skin (3) in a seismic streamer results in the recorded signals from the hydrophones (2) in the seismic streamer being contaminated with noise. This is due to the fact that the turbulence noise is transmitted to the hydrophone's near field as an acoustic signal or via shear waves in the fluid filling (6). By deriving a transfer function for the transmission of the turbulence-generated noise and using of the transfer function on the recorded signal from the hydrophone (2), the turbulence-generated noise overlying a recorded signal can be cancelled.

## Description

The invention relates to a method of cancelling turbulence noise in a fluid-filled seismic streamer. Such turbulence noise is due to turbulence in a boundary layer on the outside of the streamer skin and the turbulence-generated noise is transmitted via the streamer skin and the streamer's fluid filling to a hydrophone.

During towing of a seismic streamer for marine seismic surveys, the streamer is exposed to noise of various kinds which is picked up by the hydrophones in the streamer and interferes with the seismic reflection signals which are recorded by the hydrophone. Some examples of this kind of noise are vibrations due to the fact that the seismic streamer is exposed to linear mechanical accelerations and jerks which in turn generate a peristaltic wave mode in the streamer, acoustic noise from the towing vessel, and acceleration noise caused by small vertical movements of the streamer.

Flow noise which is generated by the towing of the streamer through the water may also occur. This flow noise is principally a turbulent noise which is caused by turbulence in a boundary layer on the outside of the streamer skin. Attempts have been made to remove or reduce this noise by making the streamer skin as streamlined as possible or by designing the streamer skin in special ways in order to minimise the creation of turbulence in the boundary layer. In addition to the turbulence noise which is caused by the towing, turbulence noise can also result from cross- currents arising from the wave activity on the surface. The turbulent eddies in the boundary layer will produce pressure fluctuations on the outside of the streamer skin. This turbulence noise is transmitted through the streamer skin and is propagated in the buoyancy fluid in the streamer, i.e. the streamer's fluid filling, and is detected by the hydrophones as noise overlying the seismic reflection signals.

It is presumed that the current noise which is detected by the hydrophones is transmitted by means of two mechanisms, viz. by direct propagation of the pressure fluctuations from the turbulent boundary layer to the hydrophones and by generation of shear waves in the fluid filling if this has a high viscosity. In the same way as for so-called peristaltic wave modes, which are due to the transmission of vibrations from the streamer plugs to streamer skin and fluid filling and the treatment of which is the subject of the present applicant's copending Norwegian patent application No. 92 0922, flow noise transmitted through the fluid filling can lead to unwanted noise in the recorded signal from the hydrophone.

According to the invention, there is provided a method as defined in the appended Claim 1.

Preferred embodiments of the invention are defined in the other appended claims.

It is thus possible to provide a method of cancelling turbulence noise in a fluid-filled seismic streamer, regardless of how this turbulence noise is transmitted to the hydrophones from the boundary layer on the outside of the streamer skin.

The invention will be further described, by way of example, with reference to the accompanying drawings, in which:
Figure 1 shows schematically a section of a seismic streamer with a streamer section;
Figure 2 shows schematically turbulence noise in the form of incoherent fluctuations overlying a periodic mode which is due to another phenomenon;
Figure 3a shows schematically a hydrophone signal before cancellation of turbulence noise; and
Figure 3b shows schematically the hydrophone signal after cancellation of turbulence noise.

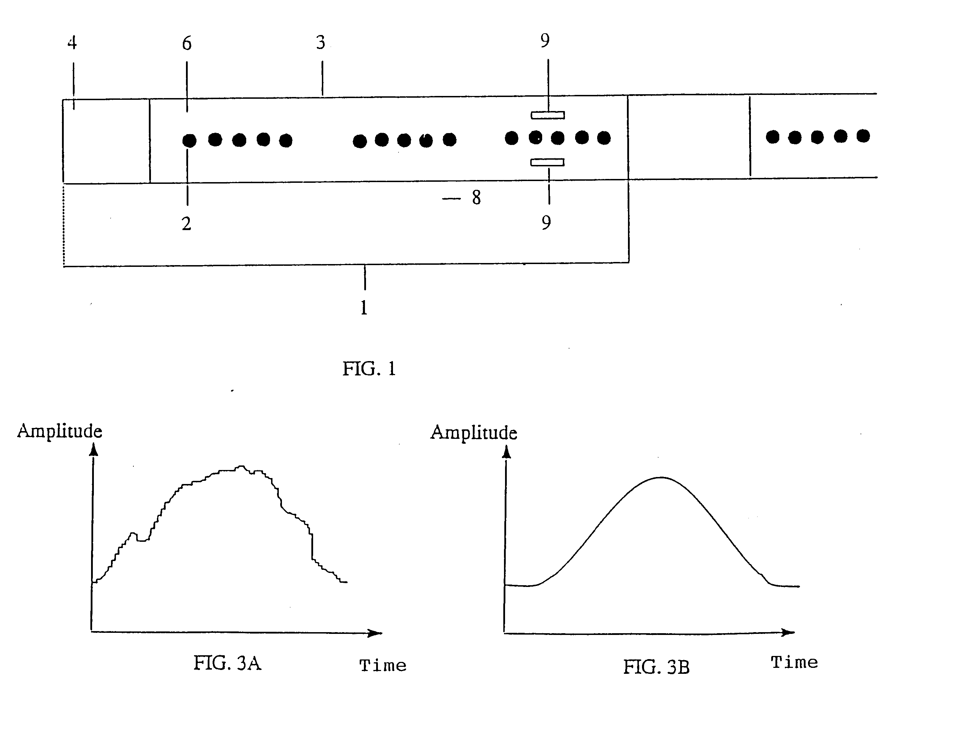

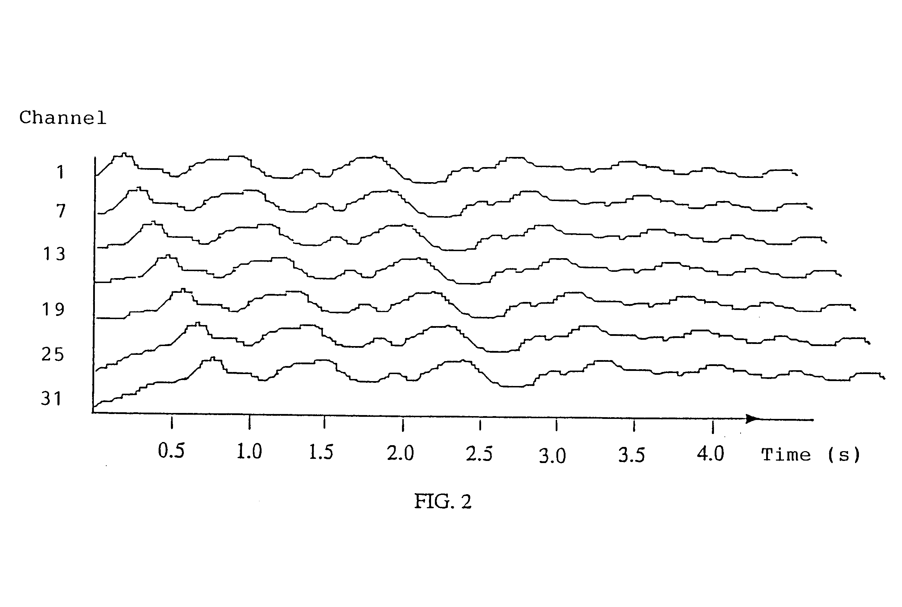

Figure 1 shows a section of a seismic streamer with a partial streamer section 1 with hydrophones or hydrophone groups 2 surrounded by a streamer skin 3. The streamer section is connected with an adjacent section by means of a coupling or plug 4.

During towing through the water, the seismic streamer is exposed to turbulence in the form of eddies in the boundary layer near the streamer skin 3. The turbulence 8 may also be caused by cross- currents arising from wave activity on the surface during towing. The turbulence or eddies 8 result in a turbulence noise or flow noise, which is transmitted via the streamer skin 3 to the hydrophones 2.

In the streamer section on the inside of the streamer skin 3 and adjacent thereto are provided near field pressure sensors 9 which are arranged to measure the turbulence noise transmitted through the streamer skin 3. This will appear in the form of pressure fluctuations in the streamer's fluid filling 6, i.e. the oil which constitutes the buoyancy fluid.

The transmission of the turbulence noise from the outside of the streamer skin via the streamer skin 3 to the hydrophones 2 can be described by a transfer function which can be found by measuring or modelling. The transfer function can be determined by measurement or experimentally by exposing the seismic streamer or a section of the seismic streamer to a simulated or real towing situation, thus causing turbulence to arise in the boundary layer on the outside of the streamer skin. The resulting turbulence noise is intercepted as a noise signal by the near field pressure sensor 9 and, afterthe transmission through the fluid filling 6, as a second noise signal in a hydrophone 2. The transfer function can thus be calculated on the basis of the noise signal from the near field pressure sensor 9 and the noise signal detected by a hydrophone 2. (Figure 2, Figure 3a).

However, the transfer function of the transmission of the turbulence noise signal may also be found by modelling. Consideration must be given to the fact that turbulence noise is principally of a stochastic nature and has a non-linear dynamic behaviour in the frequency or time domain. In other words, the turbulence noise is strongly incoherent. However, local coherence can arise on a small scale and this can be used for modelling of a transfer function for the turbulence noise. Another possible method which is suitable for modelling of the transfer function can be the use of a fractal method where the incoherent behaviour of the turbulence noise is considered as a fractal function. On the basis of such theoretical models, a transfer function can be synthesized for the turbulence noise in a seismic streamer.

The synthesized transfer function will provide theoretical values for the noise parameters and, if necessary, these can be corrected on the basis of measurements of the kind undertaken in connection with the experimental determination of the transfer function.

The known transfer function can now be applied to a turbulence noise signal (Figure 3a) which is detected by the nearfield pressure sensor 9 in an actual towing situation, i.e. during the seismic survey, and it can be used in signal processing in order to remove the noise signal due to turbulence on the outside of the streamer skin. This type of signal processing can be conducted locally, e.g. in every streamer group, but also by transmitting the vibration signal to the towing vessel's data processing unit via a spare channel in the seismic streamer. The noise signal can then be used together with the transfer function in the preprocessing of recorded data aboard the vessel.

Thus, the noise in the recorded signal can be determined and thereafter cancelled, e.g. by means of an adaptive noise cancellation which is well-known in the art.

In this connection the transfer function is commonly used in an optimisation process where the derived noise signal is combined with the noise- encumbered recorded signal with opposite polarity. With the noise signal and transfer function known, there will be standard methods available within adaptive noise cancellation. These methods are known as least-mean-squares fit.

## Claims

1. Amethod of cancelling turbulence noise in a fiuid- filled seismic streamer, where the turbulence noise is due to turbulence (8) in a boundary layer on the outside of a streamer skin (3), and transmission of turbulence-generated noise takes place via the streamer skin (3) and a fluid filling (6) of the streamer to a hydrophone (2), characterized by providing at least one near field pressure sensor (9) in each section (1) of the seismic streamer close to the streamer skin (3), deriving a transfer function for the transmission of the turbulence-generated noise, measuring a noise signal detected as a source signal in one or more of the pressure sensors (9) and as a detected signal overlying the recorded signals from one or more of the hydrophones (2), and applying said derived transfer function in processing of the recorded signal from a hydrophone (2) or hydrophone group in a section (1) of the seismic streamer in order to cancel the turbulence-generated noise which is overlying the recorded signal in the form of said detected noise signal, whereby the effect of noise generated by turbulence (8) in the boundary layer on the outside of the streamer skin (3) is removed from the hydrophone signal.

2. A method according to Claim 1, characterized in that the processing of the recorded signal with the transfer function is repeated in all sections of the seismic streamer.

3. A method according to Claim 1 or 2, characterized in that the processing of the recorded signal takes place as an adaptive cancellation.

4. A method according to any one of the preceding claims, characterized in that the transfer function is derived before a seismic survey or shot recording is initiated.

5. A method according to Claim 4, characterized in that the detected source signal is presented as a source function and used for modelling of the transfer function based on local coherence on a small scale.

6. A method according to Claim 4, characterized in that the detected source signal is presented as a source function and used for modelling of the transfer function by means of a fractal method.

7. A method according to Claim 4, characterized in that the transfer function is determined experimentally by exposing the seismic streamer or a section (1) of the seismic streamer to a simulated or real towing situation so as to create a noise- generating turbulence (8) in the boundary layer on the outside of the streamer skin (3), a turbulence- induced first noise signal being detected in one or more of the pressure sensors (9), the same turbulence-generated noise being detected as a second noise signal in one or more hydrophones (2), and the transfer function then being calculated on the basis of the first and second noise signals.

8. A method according to any of the preceding claims, characterized in that the modelled transfer function is corrected on the basis of one or more measurements performed before the seismic survey or shot recording is initiated.
